# EUROPEAN PATENT SPECIFICATION

(11) **EP 4 070 090 B1**
(45) Date of publication and mention of the grant of the patent: **07.06.2023**
(21) Application number: 20830073.1
(22) Date of filing: 30.11.2020
(51) Int. Cl.: G01N 31/22, G01N 21/78

(54) **METHOD FOR THE DETERMINATION OF SODIUM HYALURONATE CONTENT IN A HYDROGEL**
VERFAHREN ZUR BESTIMMUNG DES NATRIUM HYALURONAT GEHALTS IN EINEM HYDROGEL
MÉTHODE DE DÉTERMINATION DU CONTENU DE HYALURONATE DE SODIUM DANS UN HYDROGEL

(30) Priority: 02.12.2019 IT 201900022626
(43) Date of publication of application: 12.10.2022
(73) Proprietor: UB-Care S.r.l., 27100 Pavia (PV) (IT)
(72) Inventor: MOCCHI, Roberto, 27028 San Martino Siccomario (IT)
(74) Representative: Serravalle, Marco
(86) International application number: PCT/EP2020/083926
(87) International publication number: WO 2021/110593

(56) References cited:
- CN-A- 107 653 280
- CN-A- 109 628 363
- CN-B- 105 254 779

## Description

### Technical field of the invention

**.** The present invention is directed to a method for measuring the content of sodium hyaluronate in a hydrogel. The invention is in particular directed to hydrogel used as a filler and containing hyaluronic acid and cross-linked hyaluronic acid.

### Background of the invention

**.** Hyaluronic acid, also called hyaluronan or hyaluronate (HA), is considered an important glycosaminoglycan due to its varied physiological functions. This polymer is composed of disaccharide repetitions of glucuronic acid (UDP-GIcUA) and N-acetylglucosamine (UDP-GIcNAc), linked by β1 → 3 and β1 → 4 glycosidic bonds (Purcell BP, Kim IL, Chuo V, Guinen T, Dorsey SM, Burdick JA. (incorporation of sulfated hyaluronic acid macromers into degradable hydrogel scaffolds for sustained molecule delivery. Biomater Sci. 2009; 27:417-281, Volpi N, Schiller J, Stern R, Soltés L. Role, metabolism, chemical modifications and applications of hyaluronan. Curr Med Chem. 2009; 16:1718-452).

**.** In contrast to other glycosaminoglucans, HA is the only non-sulphated polymer, which allows the molecule to be rigid and straight. It is produced in the plasma membrane of all mammalian cells, amphibians and bacteria (Chen WYJ, Abatangelo G. Functions of hyaluronan in wound repair. Wound Repair Regen. 1999; 7:79-893) by integral membrane enzymes called hyaluronic acid synthases (HAS), which have several isoforms according to its producing organism. In humans, HA is present in all organs and especially abundant in connective tissue (Fraser JR, Laurent TC. Turnover and metabolism of hyaluronan. Ciba Found Symp. 1989; 143(41-49):281-5). HA reaches higher concentrations in the cartilage tissue in the vitreous humor (Brewton RG, Mayne R. Mammalian vitreous humor contains networks of hyaluronan molecules: electron microscopic analysis using the hyaluronan-binding region (G1) of aggrecan and link protein. Exp Cell Res. 1992; 198:237-49), the synovial fluid of the joints (Engstrom-Laurent A. Hyaluronan in joint disease. J Intern Med. 1997; 242:57-606) and in the umbilical cord (Yanagishita M. Proteoglycans and hyaluronan in female reproductive organs. EXS. 1994; 70:179-90) and is responsible for the maintenance of tissue homeostasis (Fraser JR, Laurent TC, Laurent UB. Hyaluronan: its nature, distribution, functions and turnover. J Intern Med. 1997; 242:27-33).

**.** It has been reported that with aging, HA production decreases, which results in the dehydration and loss of elasticity of the skin, contributing to the appearance of wrinkles (Gold M. The science and art of hyaluronic acid dermal filler use in esthetic applications. J Cosmet Dermatol. 2009; 8:301-7). HA is characterized by several chemical properties, which make it attractive for different applications: the high hygroscopicity, its viscoelastic nature, a high biocompatibility, the non-immunogenicity and the lack does of toxic products when degraded. The use of HA has seen results in ophthalmic cosmetics (De Figueirêdo ES, de Macedo AC, de Figueirêdo PFR, de Figueirêdo RS. Use of hyaluronic acid in ophthalmology. Arq Bras Oftalmol. 2010; 73:92-5), in surgery (Kogan G, 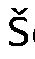 oltés L, Stern R, Gemeiner P. Hyaluronic acid: a natural biopolymer with a broad range of biomedical and industrial applications. Biotechnol Lett. 2007; 29:17-25), as a drug delivery system (Brown MB, Jones SA. Hyaluronic acid: a unique topical vehicle for the localized delivery of drugs to the skin. J Eur Acad Dermatol Venereol. 2005; 19:308-18), in rheumatology (Greenberg DD, Stoker A, Kane S, Cockrell M, Cook JL. Biochemical effects of two different hyaluronic acid products in a co-culture model of osteoarthritis. Osteoarthritis Cartilage. 2006; 14:814-22), in otolaryngology (Ramos HVL, Neves LR, Martins JRM, Nader HB, Pontes P. Influence of aging on hyaluronic acid concentration in the vocal folds of female rats. 2012; 78:14-8) and in urology (Schiraldi C. Gatta A La. Rosa M De: Biotechnological production and application of hyaluronan in biopolymers; 2010. 387-412). However, of all the previously mentioned applications, the use of HA is more frequent in the field of dermatology in dermal fillers. Lastly, in tissue engineering, HA is used as a mechanically and physically appropriate support for tissue that can be implanted in organisms without causing allergic reactions or immune responses (Nesti LJ, Li W-J, Shanti RM, Jiang YJ, Jackson W, Freedman BA, Kuklo TR, Giuliani JR, Tuan RS. Intervertebral disc tissue engineering using a novel hyaluronic acid-nanofibrous scaffold (HANFS) amalgam. Tissue Eng Part A. 2008; 14:1527-37).

**.** The popularity of dermal fillers has grown rapidly in recent years because they offer the rejuvenative and enhancing aesthetic improvements previously only achievable with surgery, but at lower cost and with limited-to-no recovery time. According to data from the American Society for Aesthetic Plastic Surgery (ASAPS), more than 1.6 million dermal filler treatments were performed in 2011, making them the second most popular nonsurgical cosmetic procedure performed in the USA after neuromodulators; the latter procedure is frequently performed in concert with dermal filler injections (American Society for Aesthetic Plastic Surgery. Cosmetic surgery national data bank statistics 2012. Available from: http:// www.surgery.org/sites/ default/files/ASAPS-2011-Stats.pdf. Accessed September 13, 2013). As public awareness and acceptance of dermal fillers grows, so does the size of the market. Their main indications are the filling of rhytides and folds, and correction of soft tissue loss due to disease or age (Rzany B, Hilton S, Prager W, et al. Expert guideline on the use of por- cine collagen in aesthetic medicine. J Dtsch Dermatol Ges. 2010; 8(3): 210-217). Increasingly, fillers are used for volume replacement and enhancement procedures (Goldberg DJ. Legal ramifications of off-label filler use. Dermatol Ther. 2006;19(3):189-193) including cheek and chin augmentation, tear trough correction, nose reshaping, midfacial volumization, lip enhancement, hand rejuvenation, and the correction of facial asymmetry.

**.** Moderate duration biodegradable fillers, such as non cross-linked collagen and hyaluronic acid (HA) fillers, are reabsorbed by the body quite quickly, so their effects are relatively short-lived. HA derivatives are the most widely used biodegradable fillers in both Europe and the USA (Zielke H, Wölber L., Wiest L, Rzany B. Risk profiles of different injectable fillers: results from the Injectable Filler Safety Study (IFS Study). Dermatol Surg. 2008;34(3):326-335) and generally have effects lasting 6-18 months depending on the source and extent of cross-linking and concentration and particle size of each product. HAs are linear polymeric dimers of N-acetyl glucosamine and glucuronic acid, which differ in the proprietary methods used to cross-link their dimers, their degree and method of chain cross-linking, the uniformity and size of their particles, and their concentration (Funt D, Pavicic T. Dermal fillers in aesthetics: an overview of adverse events and treatment approaches. Clin Cosmet Investig Dermatol. 2013:6 295-316).

**.** Cross-linking procedures are widely performed to improve the mechanical properties and prolong the duration of HA in vivo. A common method is to form a hydrogel by covalently cross-linking the HA polymer chains into a three-dimensional network (Ågerup, B., Berg, P., & Åkermark, C. (2005). Non-animal stabilized hyaluronic acid: a new formulation for the treatment of osteoarthritis. BioDrugs. (2005). 19(1), 23-30; Edsman, K., Hjelm, R., Lärkner, H., Nord, L. I., Karlsson, A., Wiebensjö, Å., et al. Intra-articular duration of DurolaneTM after single injection into the rabbit knee. Cartilage. (2011). 2(4), 384-388) with different cross-linking agents, among which the most common are considered 1,4-butanediol diglycidyl ether (BDDE), Divinyl sulfone (DVS), Polyethylene Glycol Diglycidilether (PEGDE). HA hydrogels, formed by cross-linking, have become important for many medical and aesthetic applications. The mechanical and physical properties of the hydrogels are dependent on the degrees of modification and cross-linking (La Gatta, A., Schiraldi, C., Papa, A., & De Rosa, M. (2011). Comparative analysis of commercial dermal fillers based on crosslinked hyaluronan: physical characterization and in vitro enzymatic degradation. Polymer Degradation and Stability. (2011). 96(4), 630-636; Stocks, D., Sundaram, H., Michaels, J., Durrani, M. J., Wortzman, M. S., & Nelson, D. B. (2011). Rheological evaluation of the physical properties of hyaluronic acid dermal fillers. Journal of Drugs in Dermatology, 10(9), 974-980). In the establishment of the relationships between degrees of modification and cross-linking to mechanical properties as well as to biocompatibility it is of great importance to have methods and definitions for the determination of the cross-linking parameters.

**.** Dermal fillers are classified as class III medical devices. Consequently, they must display the appropriate CE marking, including the four-digit number reflecting the notified body, on their sterile packaging. Moreover, these products must also contain an accompanying leaflet or link to a digital leaflet. In addition to the product directive, health care professionals residing in the USA must limit their use of these products to only Food and Drug Administration (FDA)-approved injectable fillers which have been listed. Unfortunately, no such list exists in the EU, however, efforts are being made to generate such a list. This shortcoming makes it very difficult to know exactly what is legally on the market. Nevertheless, similar to medicines, illegal HA-containing products can be bought online and are being intercepted by customs or during routine inspections at the different shipment companies. Consequently, there is a growing demand by the quality inspectorates to analyze the percentage of HA in suspicious HA-containing dermal fillers.

**.** The current quantification method of HA content is based on the method described in the European Pharmacopoeia for the determination of the amount of HA present in raw materials (Ph. Eur European Pharmacopeia, Council of Europe, Strasbourg, France, 8th edn, 2016). In this colorimetric method, carbazole interacts with uronic acid, obtained post acid hydrolysis of HA, and generates a violet color that absorbs at 530 nm. This assay is considered to be not very specific to be applicable to hydrogels. Therefore, alternative methods, to identify and quantify linear natural HA in hydrogels, have been developed. These methods include HPLC based methods with either a Photo Diode Array Detector (PDA), light scattering, fluorescence or mass spectrometry (MS) detector (S. B. Frazier, K. A. Roodhouse, D. E. Hourcade and L. Zhang, Open Glycosci., 2008, 1, 31-39; N. Volpi, F. Galeotti, B. Yang and R. J. Linhardt, Nat. Protoc., 2014, 9, 541-558). Additionally, also enzyme-linked immunosorbent assay (ELISA)-based methods and turbidimetric methods have been developed (S. Haserodt, M. Aytekin and R. A. Dweik, Glycobiology, 2011, 21, 175-183; N. Oueslati, P. Leblanc, C. Harscoat-Schiavo, E. Rondags, S. Meunier, R. Kapel and I. Marc, Carbohydr. Polym., 2014, 4, 102-108). However, only the turbidimetric and carbazole methods have been reported to be compatible with the quantification of cross-linked HA, which is often the preferred form in which this molecule is present in dermal fillers. The first method, similar to the carbazole assay, also suffers from possible interference from other GAGs. Therefore, it is pivotal for the public health sector to develop reliable, efficient, low cost and easily applicable cross-linked HA identification and quantification strategies for routine analysis of suspected HA containing dermal fillers.

**.** Recently, a specific and selective HA identification and quantification method has been presented, where an additional extraction step, prior to the carbazole micro-assay, is able to resolve possible interference issues that could be encountered when dealing with suspicious illegal samples (Vanhee C., Desmedt B., Baudewyns S., Kamugisha A., Vanhamme Me Bothy., J.L., Kovackova S., Courselle P., Deconinck E. Characterization of suspected dermal fillers containing hyaluronic acid. Anal. Methods, 2017, 9, 4175). However, this method is rather lengthy and still presents a broad variability of results depending on the type of hydrogel used and on the type of cross-linked HA.

**.** There is still the need of a reliable method for the quantification of HA in hydrogels, which is capable of measuring the HA content of a hydrogel in a reliable manner.

### Brief description of the invention

**.** The present invention is directed to a method for the determination of HA content of a hydrogel, which method comprises a sonication step. The sonication step dissolves the hydrogel and allows a more reliable determination of HA content.

### Brief description of the figure

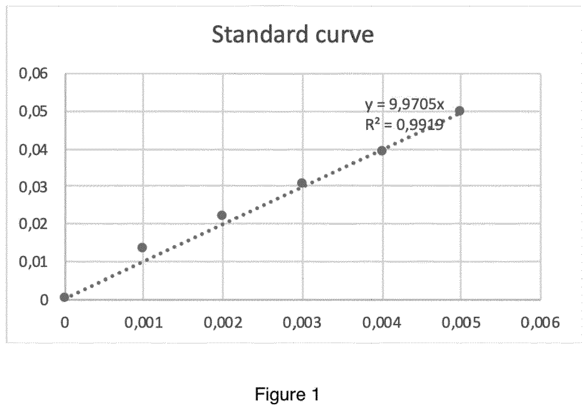

**.** Figure 1 reports the R value and the standard curve's equation of the example.

### Detailed description of the invention

**.** The present invention is directed to a method for the determination of HA content in a hydrogel, which method makes use of a sonication step. It has been surprisingly found that by sonicating a crosslinked hydrogel containing HA, it is possible to determine the HA content of the hydrogel in a reproducible way and with a low standard deviation.

**.** The most commonly used method for the determination of HA in a water solution is defined in the European Pharmacopoeia 5.0 at pages 2434-7, herein incorporated by reference. Another method for the determination of glucuronic acid by reaction with carbazole was disclosed by T. Bitter and H.M. Muir (A modified Uronic Acid Carbazole Reaction, An. Biochem. 4, 330-334 (1962)), which is herein incorporated by reference. The present invention represents an important improvement over both the method of the European Pharmacopoeia and the method of Bitter et al., to be applied on hydrogels.

**.** According to the present invention, the method comprises the following steps:
a. Preparing, as reagent A, a solution of Sodium tetraborate in Sulphuric acid.
b. Preparing reagent B by dissolving Carbazole R in Ethanol.
c. Preparing test solutions, at least in double, by dissolving the substance to be examined in an aqueous solution.
c2. Optionally, heating the test solutions to a temperature higher than room temperature, preferably between 75°C and 85°C, for at least 15 minutes, preferably for at least two hours, more preferably for about 3 hours, preferably while continuously stirring.
d. Treating the test solution with ultrasounds for a period of time sufficient to obtain a macroscopically homogeneous solution;
e. Preparing a reference stock solution by dissolving glucuronic acid, or a glucuronic acid-containing substance in an aqueous solution; preferably, the concentration of glucuronic acid or of the glucuronic acid-containing substance is comprised between 0.05 and 0.15 wt %.
f. Preparing at least 3 reference solutions by dilution of the reference stock solution in aqueous solution, preferably at concentration comprised between 0.0005% w/v and 0.0100% w/v, preferably between 0.0010 % w/v and 0.0050 % w/v;
g. Preparing the test tubes by admixing reagent A, reagent B and one of the following: reference solution, test solution, aqueous solution (blank), and optionally solution for interference (crosslinker sample or additive sample); place each test tube on a water bath for at least 5 min, then cool them to room temperature; preferably the water bath is a boiling water bath and the duration is of about 15 min.
h. Reading the absorbance at a wavelength comprised between 500 and 580 nm, preferably at about 530 nm, against the blank and optionally the sample for interference.
The method of the present invention is defined in claim 1.

**.** The percentage content of sodium hyaluronate has been calculated by interpolating the experimental absorbance values with the reference standard curve, obtained starting from known concentrations of the substrate. Calculation details:
- the mean absorbance value of the blank sample is subtracted to the mean absorbance value of each sample;
- the mean value of the Cross-linker sample (if available) is subtracted to the mean absorbance value of each sample;
- the percentage content of sodium hyaluronate in the weighted sample is calculated by interpolating the experimental absorbance values of each replicate with the reference standard curve.

**.** Concerning the interference of crosslinkers and additives, there are two possibilities. If the information concerning the composition of the hydrogel (including type of crosslinker), its quantity and the presence of other additives is available, then it is possible to prepare a solution which comprises additives and crosslinker in the amount in which they are present in the hydrogel (interference solution). In all other cases, the exact composition of the hydrogel cannot be known. Therefore, it is impossible to consider the interference of crosslinker and additives. The percent value of hyaluronic acid obtained at the end of the analysis will be probably somehow higher than the effective amount of HA in the sample.

**.** The percent content of sodium hyaluronate in the final product is calculated based on the ratio (NaHA % × 100)/ g of hydrogel. The percent value of each replicate is subjected to acceptance limits of ± 20%. The modal value, the mean value and the standard deviation are calculated.

**.** Step c2 introduces the step of heating the sample comprising the test solution for 3 h at 75-85°C. This step is not essential and could be removed; however, it is preferred because it helps to improve efficiency of the sonication step which follows immediately after.

**.** Step d (sonication of the sample) represents the most important contribution to the methods of the prior art. In fact, it has been noticed that after sonication the sample is much more homogeneous than before, and this reflects in a higher reproducibility of the analysis. Although step c2 is useful, it is not necessary to achieve disruption of the hydrogel. However, if step c2 is not used, it is necessary to apply more severe sonication conditions to solubilize the hydrogel.

**.** In a preferred embodiment, the sonication step is performed using a power comprised between 0.5 W/kg and 50 W/kg, more preferably sonication is performed at a specific power of 0.1 to 10 W/kg. In terms of specific energy used during sonication, it is comprised between 500 J/kg and 30 kJ/kg, preferably between 2 kJ/kg and 20 kJ/kg.

**.** These parameters are also influenced by the performance of step c2. When step c2 is performed, it is possible to use lower power or lower energy of the sonication treatment. Thus, when the method comprises step c2, the preferred range of energy is between 1 kJ/kg and 10 kJ/kg. When step c2 is not performed, the preferred energy range is between 3 kJ/kg and 30 kJ/kg.

**.** Another important factor influencing the power and the duration of the treatment is the chemical nature of the crosslinked hydrogel. In general, with each new gel, it will be necessary to perform a few trials to determine the experimental conditions which produce a good dissolution of the gel.

**.** Steps a and b are preferably performed according to the European Pharmacopoeia, i.e. dissolving 0.95 g of disodium tetraborate in 100.0 ml of sulfuric acid for Reagent A, and dissolving 0.125 g of carbazole in 100.0 ml of ethanol for reagent B.

**.** In step e, the reference stock solution is prepared by dissolving 50.00 to 150.00 mg of glucuronic acid, or a glucuronic acid-containing substance in 100.00 g of water. As a glucuronic acid-containing substance, it is particularly preferred the use of hyaluronic acid.

### Experimental part

### Analysis of a hydrogel

**.** Reagent A was prepared by dissolving 0.95 g of Sodium tetraborate in 100.00 ml of Sulfuric acid.

**.** Reagent B was prepared by dissolving 0.125 g of Carbazole in 100.00 ml of Ethanol.

**.** Three independent samples of the hydrogel are prepared by dissolving an amount of about 0.170 g in water and bringing the total weight to 100 g with additional water. The hydrogel weight is reported: S1: 0.1723 g; S2: 0.1808 g; S3: 0.1728 g.

**.** The hydrogel dispersions are heated at 85ºC for 3 hours. Then sonicated with a sonicator Q500 (Qsonica LLC.) at an amplification of 30% corresponding to 0.22W. After sonication the hydrogel is dispersed in water.

**.** A reference solution stock is prepared by dissolving 50 mg of HA in 100 g of water. From this solution, 5 solutions are prepared at the following concentrations (wt %): 0.001, 0.002, 0.003, 0.004, 0.005. In Table 1, the absorbance data, read at 530 nm, obtained from the standard curve are reported. The mean values and standard deviations are calculated for the replicates for each point of the standard curve.

**Table 1**

| % of standard | Mean absorbance | Standard deviation |
|---|---|---|
| 0 | 0.049 | 0.0009 |
| 0.001 | 0.062 | 0.004 |
| 0.002 | 0.070 | 0.001 |
| 0.003 | 0.079 | 0.002 |
| 0.004 | 0.088 | 0.002 |
| 0.005 | 0.098 | 0.002 |

. The mean value obtained for the blank (0.000% of substance containing glucuronic acid) is subtracted to the mean value obtained for each point of the standard curve (Table 2). The R value and the standard curve's equation are calculated in Figure 1.

**Table 2**

| % of standard | Absorbance |
|---|---|
| 0 | 0 |
| 0.001 | 0.013 |
| 0.002 | 0.022 |
| 0.003 | 0.030 |
| 0.004 | 0.039 |
| 0.005 | 0.049 |

**.** 5.0 ml of freshly prepared Reagent A were added to each test tube, previously cooled to 4°C. Each sample was carefully layered onto Reagent A in the test tube, as follows: Blank: 1.0 ml of water R; Reference solutions: 1.0 ml of each dilution of the Reference stock solution; Samples: 1.0 ml of each Test solution. The tubes were gently shaken to dissolve the double-phase created by the sample. To each test tube 0.20 ml of reagent B were added. The tubes were recapped, shacked, and put again on a water-bath for exactly 15 min. They were cooled to room temperature. Each sample was analyzed for the absorbance in double, each one for eight replicas. The mean absorbance value for the samples was calculated (Table3).

**Table 3**

| Sample | S1 | S1 | S2 | S2 | S3 | S3 |
|---|---|---|---|---|---|---|
| | 0.100 | 0.099 | 0.088 | 0.080 | 0.081 | 0.095 |
| | 0.098 | 0.099 | 0.084 | 0.080 | 0.079 | 0.095 |
| | 0.097 | 0.099 | 0.085 | 0.082 | 0.080 | 0.094 |
| | 0.100 | 0.099 | 0.085 | 0.082 | 0.082 | 0.095 |
| | 0.100 | 0.096 | 0.087 | 0.083 | 0.084 | 0.093 |
| | 0.100 | 0.097 | 0.087 | 0.083 | 0.079 | 0.093 |
| | 0.098 | 0.098 | 0.091 | 0.082 | 0.079 | 0.095 |
| | 0.097 | 0.098 | 0.087 | 0.083 | 0.084 | 0.094 |
| | | | | | | |
| Mean absorbance value | 0.0988 | 0.0981 | 0.0868 | 0.0819 | 0.0810 | 0.0943 |

. For each absorbance value obtained for the samples, the mean absorbance value of the blank sample was subtracted (Table 4).

**Table 4**

| Sample | S1 | S1 | S2 | S2 | S3 | S3 |
|---|---|---|---|---|---|---|
| | 0.0513 | 0.0503 | 0.0393 | 0.0313 | 0.0323 | 0.0463 |
| | 0.0493 | 0.0503 | 0.0353 | 0.0313 | 0.0303 | 0.0463 |
| | 0.0483 | 0.0503 | 0.0363 | 0.0333 | 0.0313 | 0.0453 |
| | 0.0513 | 0.0503 | 0.0363 | 0.0333 | 0.0333 | 0.0463 |
| | 0.0513 | 0.0473 | 0.0383 | 0.0343 | 0.0353 | 0.0443 |
| | 0.0513 | 0.0483 | 0.0383 | 0.0343 | 0.0303 | 0.0443 |
| | 0.0493 | 0.0493 | 0.0423 | 0.0333 | 0.0303 | 0.0463 |
| | 0.0483 | 0.0493 | 0.0383 | 0.0343 | 0.0353 | 0.0453 |

**.** The percentage value referred to the NaHA present in the weighed hydrogel and diluted in 100 g of water, as reported in point C of the method, was calculated from the equation obtained by the standard curve for each absorbance value of the samples. E.g. 0.0513/9.9705=0.00514 %.

**.** The percentage of NaHA present in the final product was calculated, for each absorbance value of the samples (Table 5), with following ratio: A : 100 = B : x; x = B · 100/A
Where:
A= weight of the hydrogel used for the preparation of the sample;
B= percentage value of the NaHA present in the weighed hydrogel and diluted in water.
For the first sample S, for which it was calculated B=0.00514, we have x=0.00514x100/0.1723=2.98326

**Table 5**

| Sample | S1 | S1 | S2 | S2 | S3 | S3 |
|---|---|---|---|---|---|---|
| | 2,98326 | 2,92505 | 2,17733 | 1,73354 | 1,87184 | 2,68442 |
| | 2,86684 | 2,92505 | 1,95544 | 1,73354 | 1,75576 | 2,68442 |
| | 2,80863 | 2,92505 | 2,01091 | 1,84449 | 1,81379 | 2,62638 |
| | 2,98326 | 2,92505 | 2,01091 | 1,84449 | 1,92988 | 2,68442 |
| | 2,98326 | 2,75042 | 2,12186 | 1,89996 | 2,04597 | 2,56834 |
| | 2,98326 | 2,80863 | 2,12186 | 1,89996 | 1,75576 | 2,56834 |
| | 2,86684 | 2,86684 | 2,34375 | 1,84449 | 1,75576 | 2,68442 |
| | 2,80863 | 2,86684 | 2,12186 | 1,89996 | 2,04597 | 2,62638 |
| | | | | | | |
| Average value (%) | 2,91050 | 2,87412 | 2,10799 | 1,83756 | 1,87184 | 2,64089 |
| Standard deviation | 0,08084 | 0,06554 | 0,12135 | 0,06914 | 0,12410 | 0,05145 |

. The modal value is obtained and the acceptance limits (± 20 %) are calculated on the modal value. * values over the ± 20 % acceptance limit.
Modal value: 2.87%.

**Table 6**

| | | | | | |
|---|---|---|---|---|---|
| NaHA (%) | Acceptance limits | 2,63 | 91,61 | 1,87 | ^{∗}65,29 |
| 2,98 | 104.25 | 2,63 | 91,61 | 1,84 | ^{∗}64,34 |
| 2,98 | 104.25 | 2,57 | 89,59 | 1,84 | ^{∗}64,34 |
| 2,98 | 104.25 | 2,57 | 89,59 | 1,84 | ^{∗}64,34 |
| 2,98 | 104.25 | 2,34 | 81,75 | 1,81 | ^{∗}63,27 |
| 2,87 | 100.00 | 2,18 | ^{∗}75,95 | 1,76 | ^{∗}61,24 |
| 2,87 | 100.00 | 2,12 | ^{∗}74,01 | 1,76 | ^{∗}61,24 |
| 2,87 | 100.00 | 2,12 | ^{∗}74,01 | 1,76 | ^{∗}61,24 |
| 2,87 | 100.00 | 2,12 | ^{∗}74,01 | 1,73 | ^{∗}60,47 |
| 2,87 | 100.00 | 2,05 | ^{∗}71,37 | 1,73 | ^{∗}60,47 |
| 2,81 | 97.87 | 2,05 | ^{∗}71,37 | | |
| 2,81 | 97.87 | 2,01 | ^{∗}70,14 | | |
| 2,75 | 95.75 | 2,01 | ^{∗}70,14 | | |
| 2,69 | 93.62 | 1,96 | ^{∗}68,21 | | |
| 2,68 | 93.35 | 1,93 | ^{∗}67,32 | | |
| 2,68 | 93.35 | 1,90 | ^{∗}66,27 | | |
| 2,68 | 93.35 | 1,90 | ^{∗}66,27 | | |
| 2,68 | 93.35 | 1,90 | ^{∗}66,27 | | |

. The mean % value of NaHA and the standard deviation were calculated among the values gathered inside the acceptance interval. E.g.: mean value= 2.76 %; standard deviation: 0.16%.

## Claims

1. A method for the determination of the hyaluronic acid content of a hydrogel, the method comprising the following steps:
a. preparing, as reagent A, a solution of sodium tetraborate in sulfuric acid;
b. preparing reagent B by dissolving carbazole in ethanol;
c. preparing test solutions by dissolving the hydrogel in an aqueous solution;
d. treating the test solution with ultrasounds for a period of time sufficient to obtain a macroscopically homogeneous solution;
e. preparing a reference stock solution by dissolving glucuronic acid, or a glucuronic acid-containing substance in an aqueous solution;
f. preparing at least 3 reference solutions by dilution of the reference stock solution in aqueous solution, preferably at concentration comprised between 0.0005% w/v and 0.0100% w/v, preferably between 0.0010 % w/v and 0.0050 % w/v;
g. preparing the test tubes by admixing reagent A, reagent B and one of the following: reference solution, test solution, aqueous solution (blank), and optionally solution for interference (crosslinker sample or additive sample); place each test tube on a water bath for at least 5 min, then cool them to room temperature;
h. reading the absorbance at a wavelength comprised between 500 and 580 nm, preferably at about 530 nm, against the blank and optionally the sample for interference.

2. The method according to claim 1 further comprising, after step c, the following step:
c2. heating the test solutions to a temperature higher than room temperature, preferably between 75 and 85°C for at least 15 minutes, preferably at least 2 hours, more preferably about 3 hours, preferably while continuously stirring.

3. The method of claims 1-2 wherein in step g, the water bath is a hot bath and the time is preferably about 15 minutes.

4. The method according to claims 1-3, wherein in step d. sonication is performed at a specific power between 0.5 W/kg and 50 W/kg.

5. The method of claims 1-4 wherein sonication is performed at a specific energy comprised between 500 J/kg and 30 kJ/kg.

6. The method according to claims 1-5, wherein reagent A is a solution 0.95 % w/v of disodium tetraborate in sulfuric acid, and reagent B is a solution 0.125 % w/v of carbazole in ethanol.

7. The method according to claims 1-6, wherein in step c. the test solution is prepared at least in double.

8. The method according to claims 1-7, wherein step g. is performed as follows:
adding 5 parts of reagent A to each test tube, preferably previously cooled; layer each sample onto the reagent A in the test tube, as follows: Blank: 1 part of water solution; Reference solutions: 1 part of each dilution of the Reference stock solution; Samples: 1 part of each Test solution; shake the tubes to dissolve the double-phase created by the sample; put each sample in a water bath for at least 5 minutes, preferably in a boiling water bath for 15 minutes, then cool them down to room temperature; add to each tube 0.2 parts of reagent B, shake the tubes to dissolve the double-phase and put each tube in a warm water bath for at least 5 minutes, preferably in a boiling water bath for 15 minutes.

9. The method of claims 1-8, wherein, after step h., the percentage content of sodium hyaluronate is calculated by interpolating the experimental absorbance values with the reference standard curve.

## Patentansprüche

1. Verfahren zur Bestimmung des Hyaluronsäuregehalts eines Hydrogels, wobei das Verfahren die folgenden Schritte umfasst:
a. Herstellung einer Lösung von Natriumtetraborat in Schwefelsäure als Reagenz A,
b. Herstellung von Reagenz B durch Auflösen von Carbazol in Ethanol;
c. Herstellung von Testlösungen durch Auflösen des Hydrogels in einer wässrigen Lösung;
d. Behandlung der Testlösung mit Ultraschall für einen Zeitraum, der ausreicht, um eine makroskopisch homogene Lösung zu erhalten;
e. Herstellung einer Referenz-Stammlösung durch Auflösen von Glucuronsäure oder einer glucuronsäurehaltigen Substanz in einer wässrigen Lösung;
f. Herstellen von mindestens 3 Referenzlösungen durch Verdünnen der Referenz-Stammlösung in wässriger Lösung, vorzugsweise in einer Konzentration zwischen 0,0005 % (w/v) und 0,0100 % (w/v), vorzugsweise zwischen 0,0010 % (w/v) und 0,0050 % (w/v);
g. Vorbereitung der Reagenzgläser durch Mischen von Reagenz A, Reagenz B und einer der folgenden Lösungen: Referenzlösung, Testlösung, wässrige Lösung (Leerwert) und gegebenenfalls Interferenzlösung (Vernetzer- oder Additivprobe); jedes Reagenzglas wird mindestens 5 Minuten lang in ein Wasserbad gestellt und dann auf Raumtemperatur abgekühlt;
h. Ablesen der Absorption bei einer Wellenlänge zwischen 500 und 580 nm, vorzugsweise bei etwa 530 nm, gegen den Leerwert und gegebenenfalls die Probe für die Interferenz.

2. Verfahren nach Anspruch 1, das nach Schritt c den folgenden Schritt umfasst:
c2.Erhitzen der Testlösungen auf eine höhere Temperatur als Raumtemperatur, vorzugsweise zwischen 75 und 85°C, für mindestens 15 Minuten, vorzugsweise mindestens 2 Stunden, besonders bevorzugt etwa 3 Stunden, vorzugsweise unter ständigem Rühren.

3. Verfahren nach Anspruch 1 bis 2, wobei in Schritt g das Wasserbad ein heißes Bad ist und die Zeit vorzugsweise etwa 15 Minuten beträgt.

4. Verfahren nach einem der Ansprüche 1 bis 3, wobei in Schritt d. die Beschallung mit einer spezifischen Leistung zwischen 0,5 W/kg und 50 W/kg durchgeführt wird.

5. Verfahren nach Anspruch 1-4, wobei die Beschallung mit einer spezifischen Energie zwischen 500 J/kg und 30 kJ/kg durchgeführt wird.

6. Verfahren nach den Ansprüchen 1-5, wobei Reagenz A eine Lösung von 0,95 % (Gew./Vol.) Dinatriumtetraborat in Schwefelsäure ist und Reagenz B eine Lösung von 0,125 % (Gew./Vol.) Carbazol in Ethanol ist.

7. Verfahren nach einem der Ansprüche 1 bis 6, **dadurch gekennzeichnet, dass** in Schritt c. die Testlösung mindestens doppelt hergestellt wird.

8. Verfahren nach einem der Ansprüche 1-7, wobei Schritt g. wie folgt durchgeführt wird: Zugabe von 5 Teilen Reagenz A in jedes Reagenzglas, vorzugsweise vorher gekühlt; Aufschichten jeder Probe auf das Reagenz A im Reagenzglas, wie folgt: Leerwert: 1 Teil der Wasserlösung; Referenzlösungen: 1 Teil von jeder Verdünnung der Referenz-Stammlösung; Proben: 1 Teil jeder Testlösung, die Röhrchen schütteln, um die von der Probe gebildete Doppelphase aufzulösen, jede Probe mindestens 5 Minuten lang in ein Wasserbad stellen, vorzugsweise 15 Minuten lang in ein kochendes Wasserbad, und dann auf Raumtemperatur abkühlen lassen; zu jedem Röhrchen 0,2 Teile Reagenz B hinzufügen, die Röhrchen schütteln, um die Doppelphase aufzulösen, und jedes Röhrchen mindestens 5 Minuten lang in ein warmes Wasserbad stellen, vorzugsweise 15 Minuten lang in ein kochendes Wasserbad.

9. Verfahren nach Anspruch 1 bis 8, wobei nach Schritt h. der prozentuale Gehalt an Natriumhyaluronat durch Interpolation der experimentellen Absorptionswerte mit der Referenzstandardkurve berechnet wird.

## Revendications

1. Procédé de détermination de la teneur en acide hyaluronique d'un hydrogel, le procédé comprenant les étapes suivantes :
a. la préparation, en tant que réactif A, d'une solution de tétraborate de sodium dans de l'acide sulfurique ;
b. la préparation du réactif B par dissolution de carbazole dans de l'éthanol ;
c. la préparation de solutions d'essai par dissolution d'hydrogel dans une solution aqueuse ;
d. le traitement de la solution d'essai avec des ultrasons pendant une période de temps suffisante pour obtenir une solution macroscopiquement homogène ;
e. la préparation d'une solution mère de référence par dissolution d'acide glucuronique, ou d'une substance contenant de l'acide glucuronique dans une solution aqueuse ;
f. la préparation d'au moins 3 solutions de référence par dilution de la solution mère de référence dans une solution aqueuse, de préférence à concentration comprise entre 0,0005 % p/v et 0,0100 % p/v, de préférence entre 0,0010 % p/v et 0,0050 % p/v ;
g. la préparation des tubes d'essai en mélangeant le réactif A, le réactif B et l'une des solutions suivantes : solution de référence, solution d'essai, solution aqueuse (ébauche), et éventuellement solution pour l'interférence (échantillon de réticulation ou échantillon d'additif) ; placer chaque tube d'essai sur un bain marie pendant au moins 5 minutes, puis les refroidir à température ambiante ;
h. la lecture de l'absorbance à une longueur d'onde comprise entre 500 et 580 nm, de préférence à environ 530 nm, contre l'ébauche et éventuellement l'échantillon d'interférence.

2. Procédé selon la revendication 1, comprenant en outre, après l'étape c, l'étape suivante : c2. Le chauffage des solutions d'essai à une température supérieure à la température ambiante, de préférence entre 75 et 85 °C pendant au moins 15 minutes, de préférence au moins 2 heures, plus préférablement environ 3 heures, de préférence sous agitation continue.

3. Procédé selon les revendications 1 à 2, dans lequel à l'étape g, le bain d'eau est un bain chaud et le temps est de préférence d'environ 15 minutes.

4. Procédé selon les revendications 1 à 3, dans lequel à l'étape d. la sonication est réalisée à une puissance spécifique comprise entre 0,5 W/kg et 50 W/kg.

5. Procédé selon les revendications 1 à 4, dans lequel la sonication est effectuée avec une énergie spécifique comprise entre 500 J/kg et 30 kJ/kg.

6. Procédé selon les revendications 1 à 5, dans lequel le réactif A est une solution de 0,95 % p/v de tétraborate disodique dans de l'acide sulfurique, et le réactif B est une solution de 0,125 % p/v de carbazole dans de l'éthanol.

7. Procédé selon les revendications 1 à 6, dans lequel à l'étape c. la solution d'essai est préparée au moins en double.

8. Procédé selon les revendications 1 à 7, dans lequel l'étape g. est effectuée comme suit :
ajouter de 5 parties de réactif A à chaque tube d'essai, de préférence préalablement refroidi ; superposer chaque échantillon sur le réactif A dans le tube d'essai, comme suit : Ébauche : 1 partie de solution d'eau ; Solutions de référence : 1 partie de chaque dilution de la solution mère de référence ; Échantillons : 1 partie de chaque solution d'essai ; agiter les tubes pour dissoudre la double phase créée par l'échantillon ; mettre chaque échantillon dans un bain d'eau pendant au moins 5 minutes, de préférence dans un bain d'eau bouillante pendant 15 minutes, puis les refroidir jusqu'à température ambiante ; ajouter à chaque tube 0,2 parties de réactif B, agiter les tubes pour dissoudre la double phase et mettre chaque tube dans un bain d'eau chaude pendant au moins 5 minutes, de préférence dans un bain d'eau bouillante pendant 15 minutes.

9. Procédé selon les revendications 1 à 8, dans lequel, après l'étape h., la teneur en pourcentage de hyaluronate de sodium est calculée par interpolation des valeurs d'absorbance expérimentales avec la courbe standard de référence.
